# EUROPÄISCHE PATENTSCHRIFT

(11) **EP 2 110 200 B1**
(45) Veröffentlichungstag und Bekanntmachung des Hinweises auf die Patenterteilung: **20.10.2010**
(21) Anmeldenummer: 09001450.7
(22) Anmeldetag: 03.02.2009
(51) Int. Cl.: B23Q 1/00

(54) **Freistehende Bedienstelle zur Steuerung eines Bearbeitungszentrums**
Freestanding service point for controlling a processing centre
Emplacement d'utilisation libre destiné à la commande d'un centre de traitement

(30) Priorität: 15.04.2008 DE 102008018929
(43) Veröffentlichungstag der Anmeldung: 21.10.2009
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE)
(74) Vertreter: Hager, Thomas Johannes

(56) Entgegenhaltungen:
- EP-A- 0 336 249
- DE-C1- 3 730 984
- JP-A- 6 008 172
- JP-A- 2003 136 565

## Beschreibung

Die Erfindung betrifft eine Bedienstelle, insbes. für ein Bearbeitungszentrum, wobei die freistehende Bedienstelle einen gegenüber einem Maschinengestell verschwenkbaren Tragarm besitzt. Gemäß dem Oberbegriff des Anspruchs 1, wie z.B. aus der JP-A-2003 136565 bekannt.

Ein numerisch gesteuertes Bearbeitungszentrum benötigt zur Steuerung und Programmierung eine für den Bediener gut zugängliche Bedienstelle. Von dieser Bedienstelle muss der Bediener auch eine gute Einsicht in den Arbeitsbereich des Bearbeitungszentrums besitzen, um gegebenenfalls in den Bearbeitungsprozess steuernd eingreifen zu können. Vorzugsweise ist die räumliche Position der Bedienstelle zum Arbeitsbereich des Bearbeitungszentrums verstellbar, so dass von unterschiedlichsten Richtungen, je nach individuellem Bedarf, in die Arbeitsstelle eingeschaut werden kann. Außerdem gibt es auch Bearbeitungszentren mit einer Bedienstelle, die zwei Bereiche steuert, nämlich den Arbeitsbereich der Werkzeugspindel und den Arbeitsbereich des Werkzeugmagazins. Solche Bedienstellen weisen einen sehr großen Bereich für die Verstellung der räumlichen Position der Bedienstelle auf. Zum Teil wird die Bedienstelle in so einem Fall um das Bearbeitungszentrum herum geschwenkt, um beide Bereiche (Arbeitsbereich der Werkzeugspindel und Arbeitsbereich des Werkzeugmagazins) über die Bedienstelle per Sicht ansteuern zu können.

Über die Bedienstelle kann der Bediener mit der Maschinensteuerung des Bearbeitungszentrums kommunizieren. Die Bedienstelle beinhaltet diverse Anzeige- und Bedieneinrichtungen, die für die Steuerung und für die Programmierung des Bearbeitungszentrums notwendig sind. Die zu den Anzeige- und Bedieneinrichtungen dazugehörigen elektronischen Bauelemente sind in der Regel auch in der Bedienstelle untergebracht und über eine oder mehrere Signalleitungen mit der Hauptsteuerung des Bearbeitungszentrums und über ein oder mehrere Stromleitungen mit der Spannungsversorgung des Bearbeitungszentrums verbunden. Die Hauptsteuerung und die Spannungsversorgung sind in der Regel in einem separaten elektrischen Schaltschrank angeordnet. Dieser Schaltschrank befindet sich in der Regel immer in der Nähe des Bearbeitungszentrums.

Die Anzahl der Anzeige- und Bedieneinrichtungen kann aufgrund der sehr komplexen Steuerungs- und Programmieranforderungen bei einem mehrachsigen Bearbeitungszentrums (z. B. 5-Achs-Bearbeitungszentrum) sehr groß sein. Bei den Bedieneinrichtungen handelt es sich im Allgemeinen um Schalter, Regler, Taster, alphanumerische Tastaturen und spezielle Eingabehilfen, wie eine Computer-Maus oder dergleichen. Bei den Anzeigeeinrichtungen handelt es sich in der Regel um ein oder mehrere Bildschirme, insbesondere Flachbildschirme (LCD-Bildschirme) und diverse Leuchttaster.

In jüngster Zeit werden auch vermehrt integrierte Befehls- und Anzeigeeinrichtungen in Form eines Touchscreens verwendet. Auf dem Touchscreen sind die verschiedenen Komponenten des über die Bedienstelle gesteuerten Bearbeitungszentrums visualisiert. Durch Berühren entsprechender Felder auf dem Touchscreen können die fraglichen Komponenten z. B. ein- oder ausgeschaltet oder in anderer Weise beeinflusst werden.

Je nach Anwendungsgebiet ist sogar in der Bedienstelle eine komplette PC-Steuerung inklusive Festplatte integriert.

Die Bedienstelle eines mehrachsigen Bearbeitungszentrums kann durchaus den Umfang eines Computerarbeitsplatzes annehmen. Die über die Bedienstelle auszuführende Steuerungs- und Programmiertätigkeiten sind zum Teil sehr kompliziert und erfordern eine hohe Konzentration durch den Bediener. Kleinste Fehler in der Steuerungs- und Programmiertätigkeit können erhebliche Sachschäden an dem Bearbeitungszentrum zur Folge haben. Zum Teil muss der Bediener über einen längeren Zeitraum an der Bedienstele arbeiten. Dies ist zum Beispiel dann der Fall, wenn sehr komplexe Bearbeitungsprogramme an dem Bearbeitungszentrum eingefahren und optimiert werden. Es ist durchaus möglich, dass solche Arbeiten über eine ganze Schicht gehen, d. h. der Bediener ist bis zu 8 Stunden an der Bedienstelle und führt dort diverse Steuerungs-und Programmiertätigkeiten durch. Um diese Arbeiten an der Bedienstelle ermündungsfrei und in entspannter Körperhaltung erledigen zu können, muss die Bedienstelle den neuesten ergonomischen Gesichtspunkten entsprechen und die entsprechenden relevanten ergonomischen Kriterien sind zu beachten. Die wichtigsten ergonomischen Kriterien für die Maschinengestaltung sind in einer Berufsgenossenschaftlichen Information (BGI 5048-1 und BGI 5048-2) und im dem Handbuch "Kleine ergonomische Datensammlung" zusammengefasst und bilden die Grundlage für eine ergonomische Gestaltung einer Bedienstelle.

In der DE 20 2007 008 317 U1 ist eine Bedienstelle für ein numerisch gesteuertes Bearbeitungszentrum beschrieben.

Die darin beschriebene Bedienstelle besitzt ein freistehendes und somit gut zugängliches Bedienpult. Das Bedienpult ist über einen biegefesten Tragholm schwenkbar mit dem Maschinengestell des Bearbeitungszentrums verbunden. Dadurch wird erreicht, dass das Bedienpult immer in eine für den Bediener relativ günstige Lage zum Arbeitsraum des Bearbeitungszentrums geschwenkt werden kann. Des Weiteren ist eine einstellbare und gegebenenfalls auch wegschwenkbare Sitzkonstruktion am Tragholm des Bedienpults angebracht. Bei Bedarf kann die Sitzkonstruktion eingeschwenkt und auf die für den Bediener günstigste Sitzhöhe eingestellt werden. Damit besitzt der Bediener eine Sitzhilfe, die ein Arbeiten an der Bedienstelle über einen längeren Zeitraum erleichtert. Der Tragholm besitzt ein speziell gestaltetes Querschnittprofil. Dieses Querschnittprofil erhöht die Biegefestigkeit des Tragholms und besitzt im unteren Querschnittsbereich noch einen integrierten Kabelkanal. In diesem Kabelkanal befinden sich, gut gegen mechanische Beschädigungen geschützt, die Signal- und Energieleitungen von dem Bearbeitungszentrum zur Bedienstelle.

Des Weiteren besitzt der Tragholm noch einen Abstützfuß, der die vertikale Belastung des Tragholms auf die Bedienstelle in den Fußboden überträgt, so dass keine störenden Schwingungen an das Maschinengestell gelangen können. Dies ist besonders dann wichtig, wenn der Bediener sich an der Bedienstelle anlehnt oder abstützt oder wenn der Bediener die am Tragholm befestigte Sitzhilfe benutzt.

Die Bedienstelle selber besteht hauptsächlich aus einer Tastatur und eine Anzeigeeinheit. Die Neigung der Anzeigeinheit zur Tastatur ist in einem gewissen Winkelbreich einstellbar, so dass der Bediener eine für sich günstige ergonomische Neigung einstellen kann.

Die in der DE 20 2007 008 317 U1 offenbarte Bedienstelle hat den Nachteil, dass die Sitzhilfe ein ermündungsfreies Arbeiten über einen langen Zeitraum nicht ermöglicht. Besonders kritisch ist der Sachverhalt zu sehen, dass die Sitzhilfe keine ergonomisch ausreichende Sitzfläche und überhaupt keine Rückenlehne besitzt. Mit einer handelsüblichen, in der Höhe verstellbaren Stehhilfe ist ein ermündungsfreies Arbeiten bei einer freistehenden Bedienstelle in jedem Fall besser und günstiger zu realisieren als mit einer Sitzhilfe gemäß der DE 20 200 008 317 U1. Außerdem kann nicht ohne weiteres zwischen einer stehenden und einer sitzenden Arbeitshaltung gewechselt werden. Soll zwischen den beiden Arbeitshaltungen gewechselt werden, muss die Sitzhilfe relativ umständlich weggeklappt werden. Des Weiteren ist die Arbeitshöhe der Bedienstelle überhaupt nicht einstellbar und der Platz vor der Tastatur ist viel zu gering. Die so genannte Handballenauflagefläche - gemessen von der vorderen Auflagekante bis zur Tastatur - sollte unbedingt eine Tiefe von ungefähr 10 cm besitzen. Außerdem sind auch keine freien Ablagemöglichkeiten für diverse Unterlagen an der Bedienstelle vorhanden. Besonderes bei längeren Programmierarbeiten ist es notwendig, dass der Bediener geeignete und gut erreichbare Ablagemöglichkeiten an der Bedienstelle besitzt.

Auch schwingt der weit auskragende und lang gestreckte Tragholm relativ leicht auf. Diese Schwingungen werden zwar durch den Stützfuß gegenüber dem Maschinengestell aufgenommen und in den Aufstellboden (Hallenboden) geleitet, aber besonderes beim Wechsel der Sitzhaltung auf der Sitzhilfe (Körperschwerpunkt verändert sich) werden diese Schwingungen ungehindert auf die Tastatur und auf den Bildschirm übertragen, was sehr störend für den Bediener ist, da der Bildschirm und die Tastatur aufschwingt.

Des Weiteren ist die Bedienstelle mit dem Tagholm fest verbunden. Ein Verschwenken der Bedienstelle gegenüber dem Tragholm ist somit nicht möglich, da die Bedienstelle nur mit dem Tragholm verschwenkt werden kann. Dies schränkt generell die Einstellmöglichkeit der Bedienstelle ein.

Ausgehend von diesem Stand der Technik liegt der vorliegenden Erfindung die Aufgabe zu Grunde, die bekannte Lösung unter Beibehaltung ihrer Vorteile dahingehend weiter zu verbessern, dass an der Bedienstelle eines Bearbeitungszentrum ein ermüdungsfreies Arbeiten über einen längeren Zeitraum möglich wird.

Diese Aufgabe wird mit einer Bedienstelle, gemäß Anspruch 1 gelöst.

Durch diese Maßnahme wird eine ergonomisch optimierte Gestaltung der Bedienstelle erreicht, so dass der Bediener über einen längeren Zeitraum ermüdungsfrei an der Bedienstelle arbeiten kann, da die Bedienstelle individuell auf die optimale Körperhöhe einstellbar ist.

Vorteilhafte Weiterbildungen und Ausgestaltrungen ergeben sich aus den Unteransprüchen.

Gemäß einer bevorzugten Ausgestaltung ist die Neigung des Bildschirms zur Tastatur einstellbar. Dies unterstützt eine ergonomisch vorteilhafte Gestaltung der Bedienstelle.

Der verschwenkbare Tragarm ist mit dem Maschinengestell durch ein stufenlos verstellbares Drehgelenk mit vertikaler Drehachse verbunden. Dabei kann das Drehgelenk vorteilhafterweise über eine Druckfeder kraftschlüssig vorgespannt sein. Durch diese Vorspannung wird eine Reibhemmung des Drehgelenkes erreicht, so dass die stufenlose Winkelverstellung des Tragarms nicht unwillkürlich erfolgt, sondern der Handhabung des Bedieners unterworfen ist.

Alternativ kann der verschwenkbare Tragarm mit dem Maschinengestell durch ein Drehgelenk mit vertikaler Achse und Rasterung verbunden sein. Dabei kann das Drehgelenk vorteilhafterweise über eine Druckfeder mit der Rasterung vorgespannt sein. Durch diese Vorspannung wird eine formschlüssige Arretierung des Drehgelenkes erreicht, die nur mit einem gewissen Kraftaufwand durch den Bediener überwunden werden kann.

Vorzugsweise ist an dem Tragarm ein unterer horizontaler Tragholm vorgesehen, an dem ein Kabelkanal verläuft. Dadurch ist eine sichere und geschützte Aufnahme der Energie- und Signalleitungen gewährleistet.

Nach einer bevorzugten Ausgestaltung erfolgt die Höhenverstellung der Bedienstelle gegenüber dem Tragarm stufenlos über eine blockierbare Verstellvorrichtung, insbes. eine Gasfeder. Derartige Gasfedern besitzen ein mechanisch betätigbares Ventil, das über ein Auslösemittel(z. B. einen Hebel) geöffnet werden kann. Dadurch wird die Blockierung der axial verschiebbaren Kolbenstange aufgehoben und eine manuelle Längen- bzw. Höhenverstellung der Kolbenstange ist möglich.

Gemäß einer bevorzugten Weiterbildung ist das manuell ausziehbare Ablagetablar in Richtung zum Bediener hin ausziehbar. Alternativ kann es auch quer zum Bediener hin ausziehbar sein.

Das manuell in Richtung zum Bediener hin ausziehbare Ablagetablar ist nach einer bevorzugten Ausgestaltung parallel zur schräg angeordneten Tastatur in zwei teilweise kurvenförmig ausgebildeten Führungsschienen unterhalb der Tastatur geführt. Damit wird erreicht, dass das schräg in der Bedienstelle angeordnete Ablagetablar beim Auszug aus der Bedienstelle im Endbereich des Auszugs durch eine geführte Schwenkbewegung in eine waagrechte Ebene überführt wird und dann in der waagrechten Position einrastet.

Weitere Einzelheiten, Merkmale und Vorteile der Erfindung ergeben sich aus der nachfolgenden Beschreibung anhand der Zeichnungen. Es zeigen:

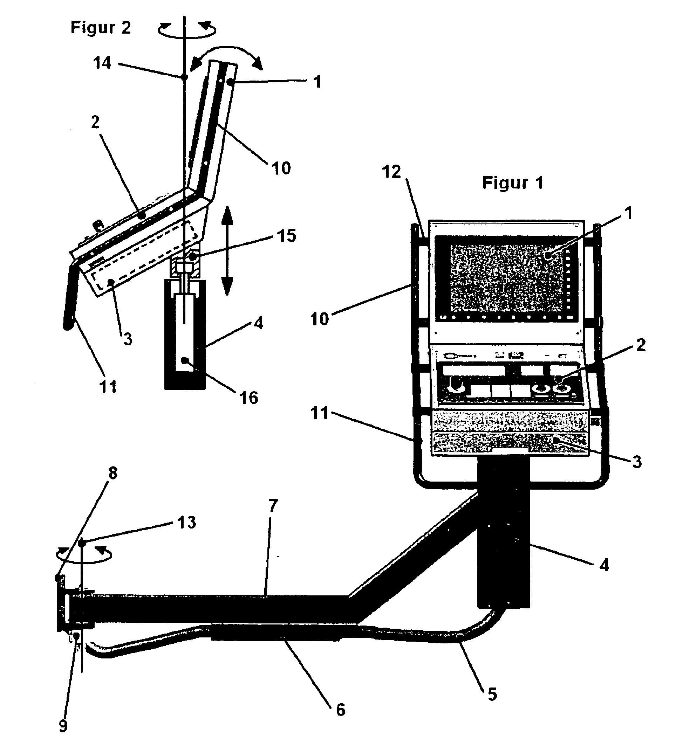

- Figur 1: eine schematische Gesamtansicht einer erfindungsgemäßen Be- dienstelle in einer Frontalansicht,
- Figur 2: eine schematische Gesamtansicht der erfindungsgemäßen Be- dienstelle in einer Seitenansicht,

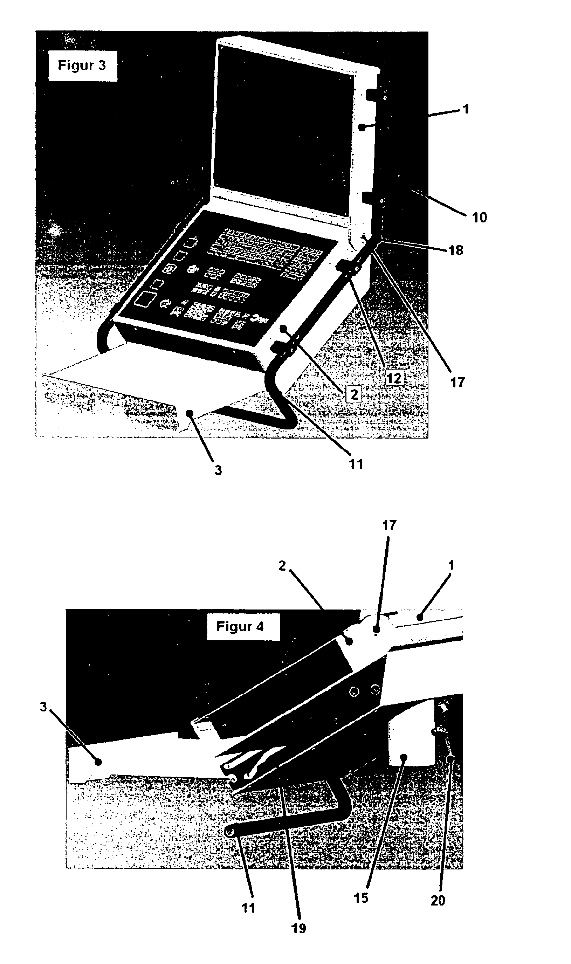

- Figur 3: eine Detailansicht der erfindungemäßen Bedienstelle,
- Figur 4: eine weitere Detailansicht der erfindungemäßen Bedienstelle,
- Figur 5: eine Ansicht der erfindungsgemäßen Bedienstelle in Verbindung mit einem Bearbeitungszentrum, und
- Figur 6: eine schematische Darstellung der verschiedenen Einstellungs- möglichkeiten der erfindungsgemäßen Bedienstelle.

In den Figuren ist eine erfindungsgemäße Bedienstelle gezeigt.

Die Bedienstelle weist einen Bildschirm 1, eine Tastatur 2 und ein ausziehbares Ablagetablar 3 auf, das im dargestellten Ausführungsbeispiel manuell in Richtung zum Bediener hin ausziehbar ist. Nach einer nicht dargestellten Ausführungsform kann es auch quer zum Bediener hin ausgezogen werden.

Die Bedienstelle ist über einen Tragarm mit dem Maschinengestell 21 eines Bearbeitungszentrums verbunden. Dazu weist der Tragarm einen vertikalen Tragholm 4 auf, der in einen horizontalen Tragholm 7 übergeht. Der horizontale Tragholm 7 wiederum ist über ein Drehgelenk 9 mit vertikaler Drehachse 13 mit einer Befestigungsplatte 8 verbunden, die an dem Maschinengestell 21 befestigt ist.

Das Drehgelenk 9 kann sowohl eine stufenlose Verstellung der Tragarms ermöglichen, als auch mit einer Rasterung versehen sein, welche eine Verstellung des Tragarms nur in Stufen zulässt.

In beiden Fällen ist das Drehgelenk 9 jedoch von einer Druckfeder, beispielsweise einem Tellerfederpaket, derart vorgespannt, dass durch die Vorspannung eine Reibhemmung des Drehgelenkes 9 erreicht wird, so dass die Winkelverstellung des Tragarms nicht unwillkürlich erfolgen kann, sondern der Handhabung des Bedieners unterworfen ist.

An dem horizontalen Tragholm 7 ist ein Kabelkanal 6 angeordnet, in welchem Signal- und Energieleitungen 5 geschützt untergebracht sind.

Der Bildschirm 1 und die Tastatur 2 sind mit oberen und unteren Handgriffen 10, 11 versehen, welche über Befestigungselemente 12 mit dem Bildschirm 1 bzw. der Tastatur 2 verbunden sind.

Die Bedienstelle ist um eine vertikale Drehachse 14 gegenüber dem vertikalen Tragholm 4 verschwenkbar. Dazu ist die Bedienstelle über ein Drehgelenk 15 mit einer stufenlos blockierbaren Verstellvorrichtung, z. B. einer Gasfeder 16 verbunden, die in dem freien oberen Ende des vertikalen Tragholms 4 gelagert ist. Infolge dieser Ausgestaltung kann die Bedienstelle einerseits um die Drehachse 14 verschwenkt und andererseits stufenlos in der Höhe gegenüber dem vertikalen Tragholm 4 verstellt werden.

Zur stufenlosen Höhenstellung der Bedienstelle ist an der Gasfeder 16 ein nicht dargestelltes Hebelgestänge vorgesehen, mit dessen Hilfe ein in der Gasfeder 16 vorhandenes Ventil zur Höhenverstellung der Bedienstelle geöffnet werden kann.

Zur stufenlosen Winkelverstellung der Bedienstelle um die vertikale Drehachse 14 ist am Drehgelenk 15 ein Klemmhebel 20 angebracht.

Um auch den Bildschirm 1 gegenüber der Tastatur 2 verstellen zu können, ist zwischen den Bildschirm 1 und der Tastatur 2 ein Drehgelenk 17 vorgesehen, welches einen verstellbaren Neigungswinkel 18 des Bildschirms 1 erlaubt.

Das Ablagetablar 3 ist parallel zur schräg angeordneten Tastatur 2 in zwei teilweise kurvenförmig ausgebildeten Führungsschienen 19 unterhalb der Tastatur 2 geführt. Infolge dieser Ausgestaltung wird das schräg in der Bedienstelle angeordnete Ablagetablar 3 beim Auszug aus der Bedienstelle im Endbereich des Auszugs durch eine geführte Schwenkbewegung in eine waagrechte Ebene überführt und kann dann in der waagrechten Position einrasten.

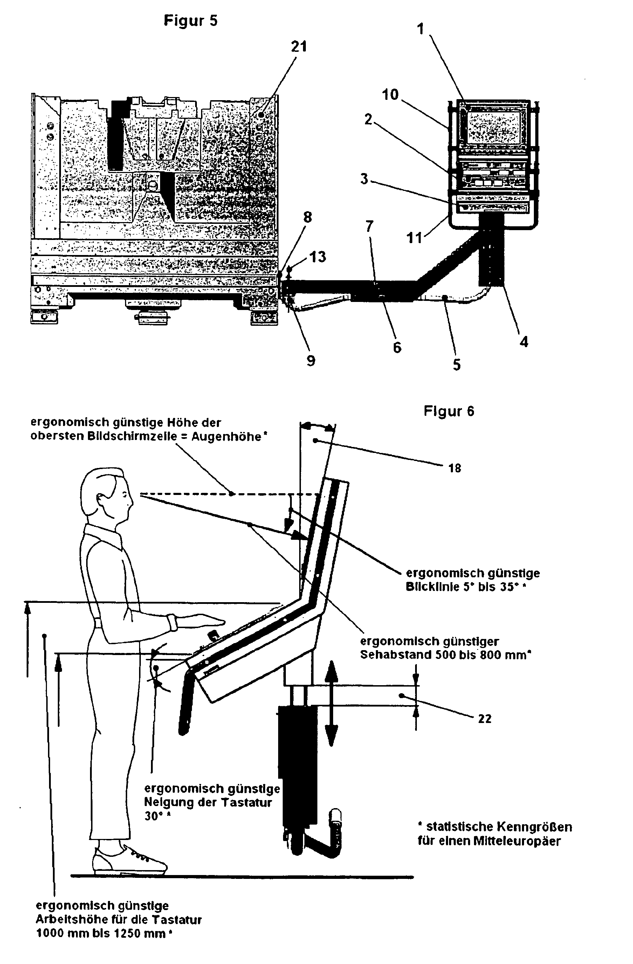

Infolge der erfindungsgemäßen Ausgestaltung ergeben sich eine Vielzahl von Anpassungsmöglichkeiten an die jeweils beste ergonomische Einstellung, wie sich insbes. aus Figur 6 ergibt, wo im Einzelnen zu erkennen ist, dass durch den verstellbaren Neigungswinkel 18 des Bildschirms 1 und die verstellbare Arbeitshöhe 22 eine besonders gute und einfache Anpassung an den jeweiligen Bediener möglich ist.

Die vorhergehende Beschreibung gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste:

- 1: Bildschirm
- 2: Tastatur
- 3: ausziehbares Ablagetablar
- 4: vertikaler Tragholm
- 5: Signal- und Energieleitungen
- 6: Kabelkanal
- 7: horizontaler Tragholm
- 8: Befestigungsplatte
- 9: Drehgelenk
- 10: obere Handgriffe
- 11: untere Handgriffe
- 12: Befestigungselemente
- 13: vertikale Drehachse des Tragholms 7
- 14: vertikale Drehachse der Bedienstelle
- 15: Drehgelenk der Bedienstelle
- 16: Gasfeder
- 17: Drehgelenk zwischen Tastatur 1 und Bildschirm 2
- 18: verstellbarer Neigungswinkel
- 19: Führungsschienen
- 20: Klemmhebel
- 21: Maschinengestell
- 22: verstellbare Arbeitshöhe

## Patentansprüche

1. Bedienstelle mit einem an einem Maschinengestell einer Arbeitsmaschine einerends schwenkbar montierbaren Tragarm (4, 7), der anderenends ein Drehgelenk (15) eines Trägers für verschiedene Bedienungselemente wie ein Träger, eine Tastatur, ein Ablagetablar und dgl., hält, so dass der Träger um eine erste vertikale Drehachse (14) gegenüber dem Tragarm (4, 7) schwenkbar ist, **dadurch gekennzeichnet, dass** das Drehgelenk (15) höhenverstellbar an dem am Maschinengestell (21) über eine zweite vertikale Drehachse (13) mit Drehgelenk (9) montierbaren Tragarm (4, 7) gehalten ist und dass die Bedienstelle ein manuell ausziehbares Ablagetablar (3) besitzt.

2. Bedienstelle nach Anspruch 1, **dadurch gekennzeichnet, dass** die Neigung des Trägers (1) zur Tastatur (2) einstellbar ist.

3. Bedienstelle nach Anspruch 2, **dadurch gekennzeichnet, dass** das Drehgelenk (9) über eine Druckfeder kraftschlüssig vorgespannt ist.

4. Bedienstelle nach Anspruch 1 oder 2, **dadurch gekennzeichnet, dass** das Drehgelenk (9) mit vertikaler Drehachse (13) mit einer Rasterung versehen ist.

5. Bedienstelle nach Anspruch 4, **dadurch gekennzeichnet, dass** das Drehgelenk (9) über eine Druckfeder mit der Rasterung vorgespannt ist.

6. Bedienstelle nach einem der Ansprüche 1 bis 5, **dadurch gekennzeichnet, dass** an dem Tragarm (4, 7) ein unterer horizontaler Tragholm (7) vorgesehen ist, an dem ein Kabelkanal (6) verläuft.

7. Bedienstelle nach einem der Ansprüche 1 bis 6, **dadurch gekennzeichnet, dass** die Höhenverstellung der Bedienstelle gegenüber dem Tragarm (4, 7) stufenlos über eine blockierbare Verstellvorrichtung, insbes. eine Gasfeder (16) erfolgt.

8. Bedienstelle nach einem der Ansprüche 1 bis 7, **dadurch gekennzeichnet, dass** das manuell ausziehbare Ablagetablar (3) in Richtung zum Bediener hin ausziehbar ist.

9. Bedienstelle nach einem der Ansprüche 1 bis 7, **dadurch gekennzeichnet, dass** das manuell ausziehbare Ablagetablar (3) quer zum Bediener hin ausziehbar ist.

10. Bedienstelle nach Anspruch 8, **dadurch gekennzeichnet, dass** das manuell in Richtung zum Bediener hin ausziehbare Ablagetablar (3) parallel zur schräg angeordneten Tastatur (2) in zwei teilweise kurvenförmig ausgebildeten Führungsschienen (19) unterhalb der Tastatur (2) geführt ist.

## Claims

1. A service point comprising a support arm (4, 7) being, at one end thereof, pivotally mountable to a machine frame of a machine, the other end thereof retaining a hinge (15) of a carrier for different operating members, such as a support, a keyboard, a shelf board and the like, such that the carrier is pivotal about a first vertical rotary axis (14) with respect to the support arm (4, 7), **characterized in that** the hinge (15) is retained to be adjustable in height at the support arm (4, 7) mountable at the machine frame (21) through a second vertical rotary axis (13) by a hinge (9), and that the service point comprises a manually extractable shelf board (3).

2. The service point of claim 1, **characterized in that** the inclination of the support (1) with respect to the keyboard (2) is adjustable.

3. The service point of claim 2, **characterized in that** the hinge (9) is biased by a pressure spring in a force-fit manner.

4. The service point of claim 1 or 2, **characterized in that** the hinge (9) having a vertical rotary axis (13) is provided with a grating.

5. The service point of claim 4, **characterized in that** the hinge (9) is biased by a pressure spring with the grating.

6. The service point of one of claims 1 to 5, **characterized in that** a lower horizontal support beam (7) is provided at the support arm (4, 7), at which a cable duct extends.

7. The service point of one of claims 1 to 6, **characterized in that** the vertical adjustment of the service point with respect to the support arm (4, 7) is performed continuously through a lockable adjusting device, in particular a gas spring (16).

8. The service point of one of claims 1 to 7, **characterized in that** the manually extractable shelf board (3) is extractable toward the user.

9. The service point of one of claims 1 to 7, **characterized in that** the manually extractable shelf board (3) is extractable transverse to the user.

10. The service point of claim 8, **characterized in that** the manually extractable shelf board (3), which is extractable toward the user, is guided in parallel with the obliquely arranged keyboard (2) in two, partially curved, guiding rails (19) below the keyboard.

## Revendications

1. Emplacement d'utilisation avec un bras support (4, 7) pouvant être monté pivotant à une extrémité sur un châssis d'une machine de traitement, bras qui tient à l'autre extrémité une articulation rotative (15) d'un support pour différents éléments de commande comme un support, un clavier, une tablette de rangement, etc., de sorte que le support peut pivoter autour d'un premier axe de rotation vertical (14) par rapport au bras support (4, 7), **caractérisé en ce que** l'articulation rotative (15) est tenue de manière réglable en hauteur sur le bras support (4, 7) pouvant se monter sur le châssis de machine (21) par l'intermédiaire d'un deuxième axe de rotation vertical (13) à articulation rotative (9), et **en ce que** l'emplacement d'utilisation possède une tablette de rangement (3) extractible manuellement.

2. Emplacement d'utilisation selon la revendication 1, **caractérisé en ce que** l'inclinaison du support (1) par rapport au clavier (2) est réglable.

3. Emplacement d'utilisation selon la revendication 2, **caractérisé en ce que** l'articulation rotative (9) est précontrainte par adhérence par l'intermédiaire d'un ressort de compression.

4. Emplacement d'utilisation selon la revendication 1 ou 2, **caractérisé en ce que** l'articulation rotative (9) à axe de rotation vertical (13) est munie d'un crantage.

5. Emplacement d'utilisation selon la revendication 4, **caractérisé en ce que** l'articulation rotative (9) est précontrainte avec le crantage par l'intermédiaire d'un ressort de compression.

6. Emplacement d'utilisation selon l'une des revendications 1 à 5, **caractérisé en ce que** sur le bras support (4, 7) est prévue une barre porteuse inférieure horizontale (7) sur laquelle s'étend un chemin de câble (6).

7. Emplacement d'utilisation selon l'une des revendications 1 à 6, **caractérisé en ce que** le réglage en hauteur de l'emplacement d'utilisation par rapport au bras porteur (4, 7) s'effectue de manière continue par l'intermédiaire d'un dispositif de réglage blocable, en particulier un vérin à gaz (16).

8. Emplacement d'utilisation selon l'une des revendications 1 à 7, **caractérisé en ce que** la tablette de rangement (3) extractible manuellement est extractible en direction de l'utilisateur.

9. Emplacement d'utilisation selon l'une des revendications 1 à 7, **caractérisé en ce que** la tablette de rangement (3) extractible manuellement est extractible transversalement vers l'utilisateur.

10. Emplacement d'utilisation selon la revendication 8, **caractérisé en ce que** la tablette de rangement (3) extractible manuellement est guidée parallèlement au clavier (2) disposé en biais dans deux rails de guidage (19) réalisés partiellement incurvés au-dessous du clavier (2).
